# EUROPÄISCHE PATENTSCHRIFT

(11) **EP 1 950 469 B1**
(45) Veröffentlichungstag und Bekanntmachung des Hinweises auf die Patenterteilung: **18.11.2015**
(21) Anmeldenummer: 07101219.9
(22) Anmeldetag: 26.01.2007
(51) Int. Cl.: F16H 61/688

(54) **Verfahren und Vorrichtung zur Steuerung eines Doppelkupplungsgetriebes**
Method and device for controlling a double clutch transmission
Procédé et dispositif de commande d'une transmission à double engranage

(43) Veröffentlichungstag der Anmeldung: 30.07.2008
(73) Patentinhaber: Getrag Ford Transmissions GmbH, 50735 Köln (DE)
(72) Erfinder: Crampen, Achim, 52499 Baesweiler (DE); Maas, Gwendolin, 50735 Köln (DE); Hinsberger, Uwe, 50823 Köln (DE)

(56) Entgegenhaltungen:
- EP-A1- 1 617 108
- DE-A1- 10 349 220
- JP-A- 9 196 164
- US-A- 5 966 989
- US-B1- 6 286 381

## Beschreibung

Die Erfindung betrifft ein Verfahren zur Steuerung eines Doppelkupplungsgetriebes.

Wie beispielsweise aus der DE 103 49 220 A1 entnommen werden kann, weist ein Doppelkupplungsgetriebe eine erste Kupplung, eine zweite Kupplung, eine erste Eingangswelle und eine zweite Eingangswelle auf. Durch die erste Kupplung lässt sich die erste Eingangswelle mit einem Antrieb wie beispielsweise einen Verbrennungsmotor in einem Kraftfahrzeug verbinden, während die zweite Kupplung eine Drehmomentübertragung von dem Antrieb auf die zweite Eingangswelle ermöglicht. Des Weiteren weist das Doppelkupplungsgetriebe der DE 103 49 220 A1 eine erste Gruppe von Gängen und eine zweite Gruppe von Gängen auf. Durch die erste Gruppe von Gängen kann die erste Eingangswelle mit einem Abtrieb zur Drehmomentübertragung zwischen Antrieb und Abtrieb verbunden werden. Entsprechend kann mit der zweiten Gruppe von Gängen eine Verbindung zwischen der zweiten Eingangswelle und dem Abtrieb hergestellt werden.

Ein Vorteil des Doppelkupplungsgetriebes besteht darin, dass ein Gangwechsel zugkraftunterbrechungsfrei erfolgen kann. Ist beispielsweise ein Quellgang aus der ersten Gruppe von Gängen eingelegt und die erste Kupplung geschlossen, so ist der Antrieb über die erste Eingangswelle und dem eingelegten Quellgang mit dem Abtrieb verbunden. Bei geöffneter zweiter Kupplung, d.h. bei einer Entkopplung von Antrieb und zweiter Eingangswelle, lässt sich ein Zielgang aus der zweiten Gruppe von Gängen vorwählen. Die Vorwahl des Zielgangs bedeutet, dass dieser Zielgang eingelegt wird gleich über die erste Eingangswelle und dem eingelegten Quellgang ein Drehmomentfluss durch das Doppelkupplungsgetriebe erfolgt. Um nun den Gangwechsel zwischen Quellgang und Zielgang zu vollziehen, wird in einer Überschneidungsphase die erste Kupplung geöffnet, während die zweite Kupplung geschlossen wird. Dadurch übertragt nun der Zielgang das Drehmoment vom Antrieb zum Abtrieb, während der Quellgang lastfrei gestellt wird. Entsprechend kann nun der Quellgang ausgelegt werden, sodass - um einen weiteren Gangwechsel vorzubereiten - ein anderer Gang aus der ersten Gruppe der Gänge eingelegt werden kann, der dann den Zielgang des nächsten Gangwechsels darstellt. Durch die Vorwahl des Zielgangs lassen sich die erforderlichen Zeiten für einen Gangwechsel bzw. zum Schalten des Doppelkupplungsgetriebes klein halten, wodurch ein hoher Fahrkomfort des mit dem Doppelkupplungsgetriebe ausgestatteten Kraftfahrzeugs erreicht wird.

In der US 6 286 381 B1, die die Merkmale des Oberbegriffs des Anspruchs 1 offenbart, ist für den Einsatz bei einem Doppelkupplungsgetriebe ein Verfahren zur Vorwahl des nächsten zu schaltenden Gangs offenbart. Ein Vorteil eines Doppelkupplungsgetriebes liegt darin, dass zur Verbesserung des Fahrkomforts ein möglicher, nachfolgend genutzter Gang vorab eingelegt werden kann. Im dem offenbarten Verfahren soll der Schaltvorgang, durch den der vorgewählte Gang einlegt wird, möglichst lange hinaus gezögert werden. Ein Steuergerät erfasst dabei zunächst über eine Fußpedalstellung die Beschleunigung des Fahrzeugs und ermittelt eine Geschwindigkeit V2, bei der der nächste Schaltvorgang erfolgen soll. Im nächsten Schritt wird eine Geschwindigkeit V1 berechnet, bei der der vorzuwählende Gang unter Beachtung der notwendigen Schaltzeiten eingelegt werden muss. Ist die aktuelle Geschwindigkeit gleich oder größer als die Geschwindigkeit V1, wird der nächste Gang voreingelegt.

Jedoch können Doppelkupplungsgetriebe mit unerwünschten Geräuschemissionen verbunden sein, die auf Schwingungsanregungen des Antriebs zurückzuführen sind. Insbesondere, wenn als Antrieb ein Dieselmotor verwendet wird, können bei bestimmten Fahrsituationen Geräuschemissionen auftreten, die den Fahrkomfort erheblich beeinträchtigen.

Der Erfindung liegt daher die Aufgabe zugrunde, ein Verfahren zur Steuerung von Doppelkupplungsgetrieben bereitzustellen, durch das bzw. durch die unerwünschte Geräuschemissionen reduziert werden können.

Die der Erfindung zugrunde liegende Aufgabe wird mit einem Verfahren gemäß Anspruch 1 gelöst. Bevorzugte Ausführungsbeispiele für das Verfahren können den Unteransprüchen 2 bis 5 entnommen werden.

Gemäß Anspruch 1 wird in Abhängigkeit wenigstens eines Parameters, der vorzugsweise ein Betriebsparameter des Antriebs oder des Doppelkupplungsgetriebes sein kann, die Vorwahl des Zielgangs verhindert oder rückgängig gemacht. So kann die Vorwahl des Zielgangs verhindert oder rückgängig gemacht werden, wenn ein vorbestimmter Grenzwert für den Parameter überschritten wird.

Der wenigstens eine Parameter ist ein Drehmoment des Antriebs oder eine Größe, die mit dem Drehmoment des Antriebs korreliert. Eine derartige, mit dem Drehmoment korrelierende Größe kann beispielsweise die Stellung des Gaspedals sein, mit der die Kraftstoffzufuhr zum Verbrennungsmotor vorgegeben wird.

Die Vorwahl des Zielgangs wird dabei verhindert oder rückgängig gemacht, wenn das Drehmoment des Verbrennungsmotors einen bestimmten Grenzwert überschreitet. Nur wenn das Drehmoment unterhalb dieses Grenzwertes liegt, ist eine Vorwahl des Zielgangs möglich.

Der Erfindung liegt die Erkenntnis zugrunde, dass unerwünschte Geräuschemissionen in Form von Getrieberasseln auf den vorgewählten Zielgang zurückzuführen sind. Vorgewählt heißt, dass der Zielgang schon eingelegt ist, aber noch nicht unter Last steht.

Dieses Getrieberasseln bei vorgewähltem Zielgang lässt sich anhand eines Doppelkupplungsgetriebes mit einer ersten Ausgangswelle und einer zweiten Ausgangswelle näher erläutern. Ein Gang des Doppelkupplungsgetriebes soll jeweils durch ein Zahnradpaar realisiert sein, das ein Festrad und ein mit dem Festrad kämmendes Losrad umfasst. Beispielsweise kann das Festrad auf einer der beiden Eingangswellen sitzen, während das Losrad auf einer der beiden Ausgangswellen gelagert ist. Durch eine dem Losrad zugeordnete Gangschaltkupplung lässt sich eine drehfeste Verbindung zwischen Losrad und der betreffenden Ausgangswelle herstellen. Ist diese drehfeste Verbindung hergestellt, so ist der Gang, der durch das Zahnradpaar realisiert wird, eingelegt.

Die beiden Ausgangswellen sind drehfest mit dem Abtrieb verbunden. Wird nun bei eingelegtem Quellgang aus der ersten Gruppe von Gängen ein Drehmoment von dem Antrieb auf die erste Ausgangswelle zum Abtrieb übertragen, so dreht sich aufgrund der drehfesten Verbindung zwischen Abtrieb und den beiden Ausgangswellen auch die zweite Ausgangswelle. Ist der Zielgang aus der zweiten Gruppe von Gängen vorgewählt, d.h. eingelegt, dreht sich das Losrad des dem Zielgang zugeordneten Zahnradpaar mit der zweiten Ausgangswelle, so dass sich auch das Festrad dieses Zahnradpaares und letztlich damit zweite Eingangswelle dreht. Die zweite Eingangswelle und Teile der geöffneten zweiten Kupplung bilden dabei ein Schwingungssystem, das aufgrund von Schwingungsanregungen, die von dem Antrieb stammen und über die zweite Ausgangswelle und das Losrad des Zielgangs übertragen werden, in Schwingen versetzt werden kann. Durch dieses Schwingen kann das unerwünschte Getrieberasseln entstehen. Eine Entkopplung des die zweite Eingangswelle umfassenden Schwingungssystems erfolgt dadurch, dass das Losrad des Zielgangs nicht oder nicht mehr mit der zweiten Ausgangswelle drehfest verbunden ist. Dadurch werden die Schwingungen des Antriebs praktisch nicht mehr auf die zweite Eingangswelle übertragen.

Das Losrad des Zielgangs muss nicht notwendigerweise auf der zweiten Ausgangswelle angeordnet sein, sondern kann auch - wie beim Zahnradpaar des Quellgangs - auf der ersten Ausgangswelle sitzen. Aber auch in diesem Fall würde die zweite Eingangswelle einer Schwingungsanregung durch den Antrieb ausgesetzt sein.

Es sei an dieser Stelle darauf hingewiesen, dass das erfindungsgemäße Verfahren auf beliebig aufgebaute Doppelkupplungsgetriebe angewendet werden kann, bei denen im Normalbetrieb eine der Kupplungen Drehmoment überträgt und die andere Kupplung im wesentlichen geöffnet ist und entsprechend kein oder im wesentlichen kein Drehmoment überträgt. Beispielsweise kann das Doppelkupplungsgetriebe auch mehr als zwei Ausgangswellen und/oder auch Zwischenwellen aufweisen, die zwischen Eingangswellen und Ausgangswellen angeordnet sind.

In einem bevorzugten Ausführungsbeispiel ist der wenigstens eine Parameter eine Drehzahl des Antriebs. So kann des Verfahren vorsehen, dass bei Unterschreiten einer bestimmten Drehzahl des Antriebs, beispielsweise in Form eines Verbrennungsmotors, insbesondere eines Dieselmotors, die Vorwahl des Zielgangs verhindert wird. Erst wenn der Verbrennungsmotor eine gewisse Drehzahl überschreitet, lässt sich der Zielgant vorwählen.

In einem bevorzugten Ausführungsbeispiel wird die Vorwahl des Zielgangs verhindert oder rückgängig gemacht in Abhängigkeit mehrerer Parameter, wobei die Parameter ein Kennfeld festlegen. Beispielsweise könnte ein derartiges Kennfeld von der Drehzahl und von dem Drehmoment des Antriebs abhängen. So wird in einem bevorzugten Ausführungsbeispiel die Vorwahl des Zielgangs blockiert, wenn gleichzeitig ein Grenzwert für die Drehzahl unterschritten und ein Grenzwert für das Drehmoment überschritten wird. Darüber hinaus könnten noch weitere Parameter beim erfindungsgemäßen Verfahren berücksichtigt werden, wie beispielsweise eine Temperatur oder die Laufleistung/Verschleiß des Doppelkupplungsgetriebes.

Es können zwei oder mehr unterschiedliche Modi vorgesehen sein, durch die die Höhe des vorbestimmten Grenzwertes für den Parameter variiert werden können. In einem bevorzugten Ausführungsbeispiel sind ein Standard-Modus und ein Sport-Modus vorgesehen. In dem Sport-Modus werden dabei die Grenzen, innerhalb derer eine Vorwahl des Zielgangs möglich ist, weiter gesteckt als in dem Standard-Modus. Dadurch werden insgesamt kürzere Schaltzeiten bei etwas höheren Geräuschemissionen erreicht.

Wenn die erste und die zweite Kupplung des Doppelkupplungsgetriebes als hydraulisch betätigbare Kupplung ausgebildet sind, wird jeweils eine Kupplung bei einer Druckbeaufschlagung geschlossen und bei einer Drucklosstellung geöffnet ("normally open clutch"). Ist beispielsweise vor dem Gangwechsel die zweite Kupplung geöffnet, so muss diese nicht mit Druck beaufschlagt werden. Ein entsprechendes Regelventil, durch das die zweite Kupplung gesteuert wird, kann nun die Vorwahl des Zielgangs vornehmen oder zurücknehmen. Somit kann das Verfahren bei einem Doppelkupplungsgetriebe mit vergleichsweise wenigen Regelventilen ohne weiteres angewendet werden.

Anhand der in der Zeichnung ausgeführten Ausführungsbeispiele soll die Erfindung näher erläutert werden. Es zeigen:
- Figur 1: ein Schema eines Doppelkupplungsgetriebes;
- Figur 2: den Verlauf einer Rasselintensität über einer Motor-Drehzahl;
- Figur 3: ein Ablaufdiagramm für ein bevorzugtes Ausführungsbeispiel der Erfindung; und
- Figur 4: zwei unterschiedliche Kennfelder.

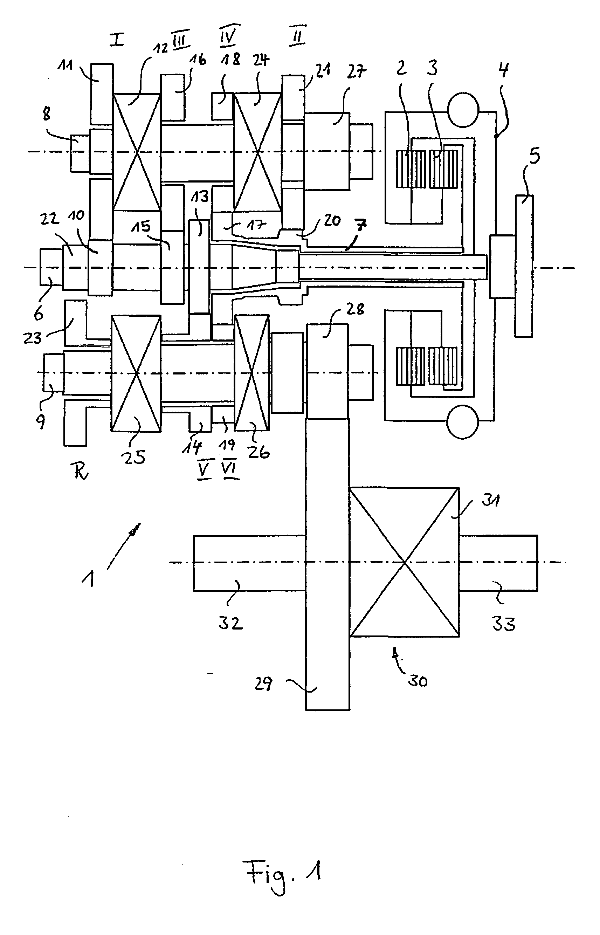

Figur 1 zeigt in schematischer Weise ein Doppelkupplungsgetriebe, das mit dem Bezugszeichen 1 gekennzeichnet ist. Das Doppelkupplungsgetriebe 1 weist eine erste Kupplung 2 und eine zweite Kupplung 3 auf. Die Kupplungen 2, 3 sind eingangsseitig mit einem Schwingungsdämpfer 4 bzw. mit einem Flansch 5 zum Verbinden des Doppelkupplungsgetriebes 1 mit einem hier nicht dargestellten Antrieb beispielsweise eines Kraftfahrzeugs gekoppelt. Eine erste Eingangswelle 6 und eine zweite Eingangswelle 7 sind zueinander koaxial angeordnet, während die zweite Eingangswelle 7 als Hohlwelle ausgebildet ist. Parallel zu den Eingangswellen 6, 7 und dazu beabstandet sind zwei Ausgangswellen 8, 9 vorgesehen.

Das Doppelkupplungsgetriebe 1 weist eine erste Gruppe von Gängen I, III, V, R und eine zweite Gruppe von Gängen II, IV, VI auf. Beispielsweise wird ein erster Vorwärtsgang I durch ein Zahnradpaar realisiert, das ein Festrad 10 und ein Losrad 11 umfasst. Während das Festrad 10 drehfest mit der ersten Eingangswelle 6 verbunden ist, sitzt das Losrad 11 in Drehrichtung gesehen lose auf der Ausgangswelle 8.

Durch eine Gangschaltkupplung 12 lässt sich eine drehfeste Verbindung zwischen Losrad 11 und Ausgangswelle 8 herstellen, wodurch der erste Vorwärtsgang I eingelegt ist.

Entsprechend dem Zahnradpaar bestehend aus Festrad 10 und Festrad 11 sind weitere Zahnradpaare vorgesehen, durch die weitere Vorwärtsgänge II bis VI sowie ein Rückwärtsgang R realisiert werden. So bilden Festrad 13 und Losrad 14 das Zahnradpaar des fünften Vorwärtsgangs V. Festrad 15 und Losrad 16 bilden das Zahnradpaar des dritten Vorwärtsgangs III. Die Festräder 13, 15 sind dabei wie das Festrad 10 auf der ersten Eingangswelle 6 angeordnet.

Ein Festrad 17 auf der zweiten Eingangswelle 7 kämmt sowohl mit einem Losrad 18 auf der Ausgangswelle 8 und mit einem Losrad 19 auf der Ausgangswelle 9. Somit ist das Festrad 17 gleichzeitig Teil von zwei Zahnradpaaren, durch die der vierte Vorwärtsgang IV bzw. der sechste Vorwärtsgang VI realisiert werden. Dem zweiten Vorwärtsgang II lassen sich das Festrad 20 und das Losrad 21 zuordnen.

Der Rückwärtsgang R wird durch ein Festrad 22 auf der ersten Eingangswelle 5, einem Losrad 22 auf der Ausgangswelle 9 und einem in der Figur 1 nicht dargestellten Zwischenrad realisiert, das sowohl mit dem Festrad 22 als auch mit dem Losrad 23 kämmt und für die erforderliche Drehrichtungsumkehr gegenüber den Vorwärtsgängen sorgt.

Durch die Gangschaltkupplung 12 lässt sich nicht nur der erste Vorwärtsgang I, sondern auch der dritte Vorwärtsgang III einlegen. Eine entsprechende Gangschaltkupplung für den zweiten und den vierten Vorwärtsgang II, IV ist mit dem Bezugszeichen 24 versehen. Der fünfte Vorwärtsgang V und der Rückwärtsgang R weisen eine gemeinsame Gangschaltkupplung 25 auf. Durch eine Gangschaltkupplung 26 lässt sich das Losrad 19 mit der Ausgangswelle 9 drehfest verbinden, um somit den sechsten Vorwärtsgang VI einzulegen.

Ein Zahnrad 27 auf der Ausgangswelle 8 und ein Zahnrad 28 auf der Ausgangswelle 9 kämmen mit einem Ringzahnrad 29, das mit einem Abtrieb 30 verbunden ist. Der Abtrieb 30 umfasst ein Differential 31 und zwei Achsen 32, 33, wobei das Differential 31 das Drehmoment auf die Achsen 32, 33 aufteilt.

Um das erfindungsgemäße Verfahren zu verdeutlichen, soll anhand Figur 1 eine Betriebssituation des Doppelkupplungsgetriebes 1 dargestellt werden. In dieser Betriebssituation soll die zweite Kupplung 3 geschlossen und der vierte Vorwärtsgang IV eingelegt sein. Somit überträgt das Doppelkupplungsgetriebe 1 Drehmoment von dem Flansch 5 über die zweite Kupplung 3, die zweite Eingangswelle 7, das Festrad 17, das mittels der Gangschaltkupplung 24 fest mit der Ausgangswelle verbundene Losrad 18, die Ausgangswelle 8, das Zahnrad 27 und letztlich über das Ringzahnrad 29 auf den Abtrieb 30. Die erste Kupplung 2 ist dabei geöffnet. Um nun einen Gangwechsel vom eingelegten vierten Vorwärtsgang IV in den fünften Vorwärtsgang V vorzubereiten, wird durch die Gangschaltkupplung 25 das Losrad 14 drehfest mit der Ausgangswelle 9 verbunden. Da die Ausgangswelle 9 über das Zahnrad 28 drehfest mit dem Ringzahnrad 29 verbunden ist, dreht sich bei vorgewähltem fünften Vorwärtsgang V nun auch die erste Eingangswelle 6. Wenn die erste Kupplung 2 geöffnet ist, bildet die erste Eingangswelle 6 mit ihren diversen Festrädern und mit Teilen der geöffneten ersten Kupplung 2 ein Schwingungssystem, das aufgrund von Schwingungsanregungen vom Antrieb in (Dreh-)Schwingung geraten kann. Diese Schwingungen verursachen das zu vermeidende Getrieberasseln. Um die erste Eingangswelle 6 von den Schwingungsanregungen des Antriebs zu entkoppeln bzw. eine solche Kopplung gar nicht erst zuzulassen, wird eine Vorwahl des fünften Vorwärtsgangs V blockiert. Entsprechend sitzt das Losrad 14 in Drehrichtung lose auf der Ausgangswelle 9 und überträgt nicht mehr die Schwingungsanregungen auf die erste Eingangswelle 6.

Bei einem Gangwechsel vom vierten Vorwärtsgang IV in den dritten Vorwärtsgang III ergibt sich ein ähnliches Bild. Auch hier kann der dritte Vorwärtsgang III durch die Gangschaltkupplung 12 vorgewählt werden, so dass das entsprechende Losrad 16 fest mit der Ausgangswelle 8 verbunden ist. Schwingungsanregungen, die vom Antrieb stammen und über den eingelegten vierten Vorwärtsgang IV auf die Ausgangswelle 8 übertragen werden, werden über den nun vorgewählten dritten Vorwärtsgang III auf die erste Eingangswelle 6 weitergeleitet. Ein Unterschied zum Gangwechsel in den fünften Vorwärtsgang V besteht darin, dass die Übertragung der Schwingungsanregungen nicht über das Ringzahnrad 29 erfolgt, da der eingelegte Vorwärtsgang IV und der vorgewählte Vorwärtsgang III auf der gleichen Ausgangswelle 8 sitzen.

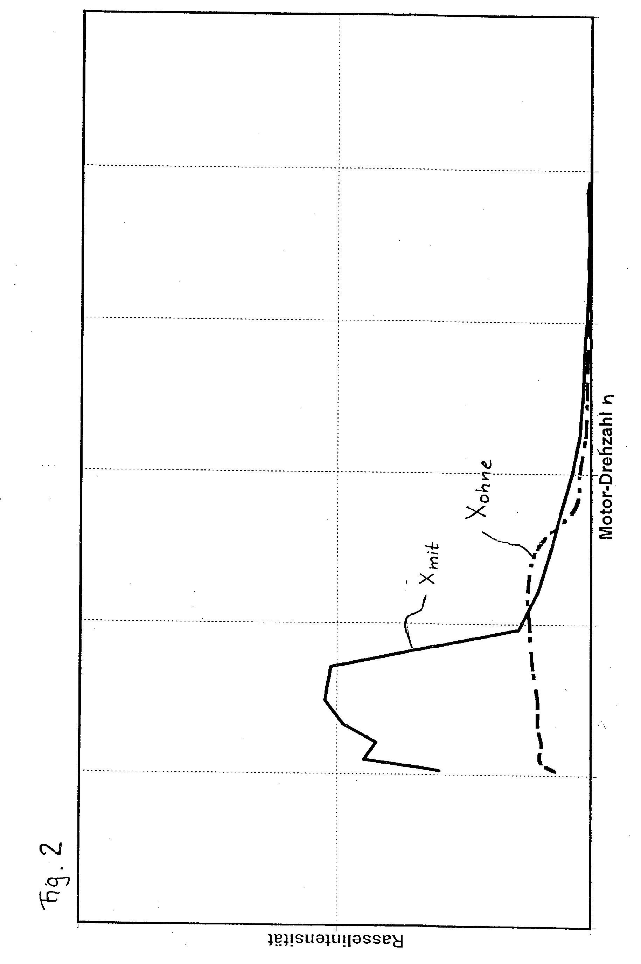

Figur 2 zeigt, wie durch die Verhinderung der Vorwahl des Zielgangs eine Rasselintensität des Doppelkupplungsgetriebes in Abhängigkeit einer Drehzahl des Antriebs oder des Motors (Motor-Drehzahl n) reduziert werden kann. Die durchgezogene Linie Xₘᵢₜ gibt die Rasselintensität des Doppelkupplungsgetriebes bei vorgewähltem Zielgang an (Rasselintensität mit vorgewähltem Zielgang). Die strichpunktierte Linie Xₒₕₙₑ zeigt die Rasselintensität des Doppelkupplungsgetriebes, bei dem der Zielgang nicht eingelegt ist (Rasselintensität ohne vorgewähltem Zielgang). In einem unteren Drehzahlbereich des Antriebs bzw. des Motors lässt sich durch das erfindungsgemäße Verfahren eine signifikante Reduzierung der Rasselintensität erreichen, während in anderen Bereichen sich die Rasselintensität der Kurven Xₘᵢₜ, Xₒₕₙₑ nicht signifikant voneinander unterscheiden. Der starke Abfall der Rasselintensität Xₘᵢₜ auf ein Niveau von Xₒₕₙₑ ab einer bestimmten Motor-Drehzahl lässt sich dadurch erklären, dass ab dieser Motor-Drehzahl die Übertragung der Schwingungsanregungen auf die nicht unter Last stehende Eingangswelle zusammenbricht.

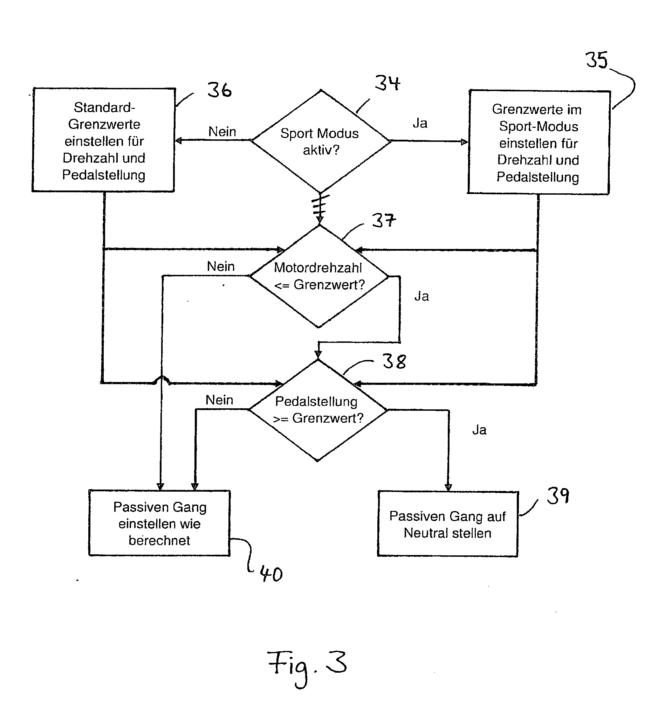

Figur 3 zeigt ein Ablaufdiagramm eines bevorzugten Ausführungsbeispiels der Erfindung. In einer Verzweigung 34 wird abgefragt, ob ein Sport-Modus aktiviert ist. Ist dies der Fall, so werden in einem Prozess 35 die Grenzwerte des Sport-Modus aufgerufen und entsprechend für das weitere Verfahren verwendet. Ansonsten werden in Prozess 36 die Grenzwerte eines Standort-Modus verwendet.

Der Verzweigung 34 folgt Verzweigung 37, in der abgefragt wird, ob die Motor-Drehzahl n kleiner als ein Grenzwert n_{G} für die Drehzahl n, dessen Höhe von dem gewählten Modus abhängt. Ist Die Drehzahl n kleiner als der Grenzwert n_{G}, folgt Abzweigung 38, in der eine Abfrage gestartet wird, ob die Gaspedalposition größer ist als ein Grenzwert für die Gaspedalposition. Wenn auch diese Abfrage bejaht werden kann, wird in einem Prozess 39 die Vorwahl des Zielganges verhindert oder rückgängig gemacht. Dies geschieht dadurch, dass die dem Zielgang zugehörige Gangschaltkupplung auf neutral gestellt wird.

Wenn eine der in den Verzweigungen 37, 38 gestellten Fragen mit "nein" beantwortet wird, wird die Vorwahl des Zielganges nicht verhindert. Vielmehr kann in einem Prozess 40 nun der Zielgang vorgewählt werden, der aufgrund der Fahrsituation (Beschleunigung, Lastreduzierung) berechnet oder bestimmt wird.

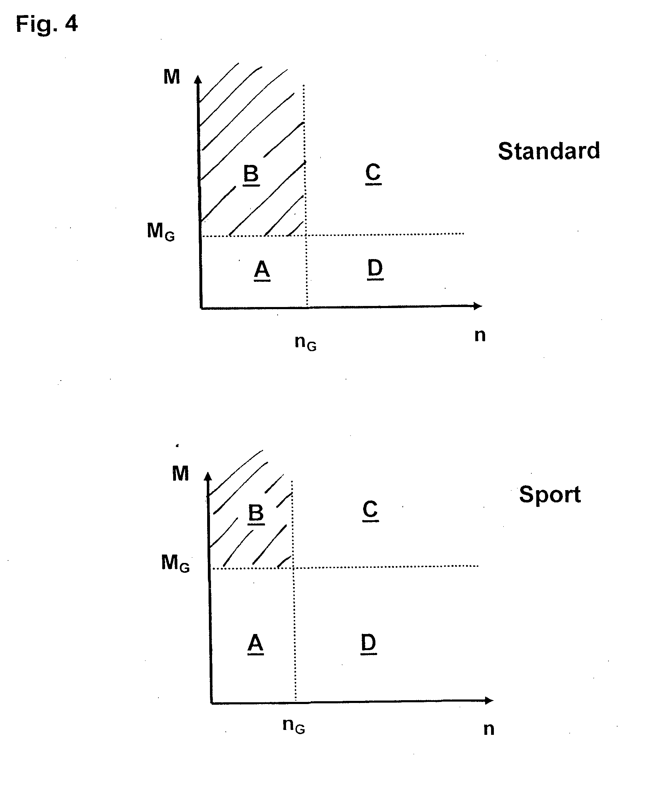

Figur 4 zeigt zwei Kennfelder, die jeweils durch die Motor-Drehzahl n und ein Motor-Drehmoment M aufgespannt werden. Die Grenzwerte n_{G} für die Motor-Drehzahl und M_{G} für das Motor-Drehmoment teilen das Kennfeld in vier Bereiche A, B, C, D auf. Das obige Kennfeld gibt dabei die Grenzwerte n_{G}, M_{G} für den Standard-Modus wieder, während das untere Kennfeld den Sport-Modus charakterisiert. Gemäß des Ausführungsbeispiels der Figur 3 wird eine Vorwahl des Zielgangs im Bereich B des Kennfeldes verhindert (siehe auch schraffiertes Feld), wenn die Motor-Drehzahl n unterhalb des Grenzwertes n_{G} und das Motordrehmoment M oberhalb des Grenzwer-tes M_{G} liegt. In allen übrigen Bereichen A, C, D wird erfindungsgemäß eine Vorwahl nicht verhindert.

Im Sport-Modus werden die Grenzwerte n_{G}, M_{G} derart verschoben, dass der Bereich B kleiner wird und die Verhinderung der Vorwahl des Zielgangs in wenigeren Fahrsituationen erfolgt.

Wird im Verfahren das Motor-Drehmoment nicht berücksichtigt, sondern nur die Motor-Drehzahl, so wird in den Bereichen A, B die Vorwahl des Zielgangs verhindert.

### Bezugszeichenliste

- 1: Doppelkupplungsgetriebe
- 2: erste Kupplung
- 3: zweite Kupplung
- 4: Schwingungsdämpfer
- 5: Flansch
- 6: erste Eingangswelle
- 7: zweite Eingangswelle
- 8: Ausgangswelle
- 9: Ausgangswelle
- 10: Festrad
- 11: Losrad
- 12: Gangschaltkupplung
- 13: Festrad
- 14: Losrad
- 15: Festrad
- 16: Losrad
- 17: Festrad
- 18: Losrad
- 19: Losrad
- 20: Festrad
- 21: Losrad
- 22: Festrad
- 23: Losrad
- 24: Gangschaltkupplung
- 25: Gangschaltkupplung
- 26: Gangschalkupplung
- 27: Zahnrad
- 28: Zahnrad
- 29: Ringzahnrad
- 30: Abtrieb
- 31: Differential
- 32: Achse
- 33: Achse
- 34: Verzweigung
- 35: Prozess
- 36: Prozess
- 37: Verzweigung
- 38: Verzweigung
- 39: Prozess
- 40: Prozess

## Patentansprüche

1. Verfahren für die Steuerung eines Doppelkupplungsgetriebe (1) mit einer ersten Kupplung (2) und einer zweiten Kupplung (3), mit einer ersten Eingangwelle (6) und mit einer zweiten Eingangswelle (7), wobei durch die erste Kupplung (2) die erste Eingangswelle (6) und durch die zweite Kupplung (3) die zweite Eingangswelle (7) mit einem Antrieb verbindbar sind, mit einer ersten Gruppe von Gängen und mit einer zweiten Gruppe von Gängen, wobei durch die erste Gruppe von Gängen die erste Eingangswelle (6) und durch die zweite Gruppe von Gängen die zweite Eingangswelle (7) mit einem Abtrieb zur Drehmomentübertragung von Antrieb auf Abtrieb verbindbar sind, wobei das Verfahren zu Steuerung vor einem Gangwechsel von einem eingelegten Quellgang aus der ersten Gruppe von Gängen zu einem Zielgang aus der zweiten Gruppe von Gängen die Vorwahl des Zielgangs ermöglicht, wobei in Abhängigkeit wenigstens eines Parameters, vorzugsweise eines Betriebsparameters des Antriebs und/oder des Doppelkupplungsgetriebes (1), die Vorwahl des Zielgangs verhindert oder rückgängig gemacht wird, **dadurch gekennzeichnet,**
- **dass** bei Überschreiten eines vorbestimmten Grenzwertes (M_{G}) für den wenigstens einen Parameter die Vorwahl des Zielgangs verhindert oder rückgängig gemacht wird,
- und **dass** der wenigstens eine Parameter ein Drehmoment (M) des Antriebs ist oder eine Größe ist, die mit dem Drehmoment (M) des Antriebs korreliert.

2. Verfahren nach Anspruch 1, **dadurch gekennzeichnet, dass** ein weiterer Parameter eine Drehzahl (n) des Antriebs ist.

3. Verfahren nach Anspruch 2, **dadurch gekennzeichnet, dass** in Abhängigkeit eines Kennfeldes mehrerer Parameter (n, M) das Einlegen des Zielgangs verhindert oder rückgängig gemacht wird.

4. Verfahren nach Anspruch 1, **dadurch gekennzeichnet, dass** in Abhängigkeit wenigstens zwei unterschiedlicher Modi die Höhe des vorbestimmten Grenzwertes für den wenigstens einen Parameter variiert werden kann.

5. Verfahren nach einem der Ansprüche 1 bis 4 **dadurch gekennzeichnet, dass** die erste Kupplung (2) und zweite Kupplung (3) als hydraulisch betätigbare Kupplungen ausgebildet sind und jeweils eine Kupplung bei einer Druckbeaufschlagung geschlossen und bei einer Drucklosstellung geöffnet wird.

## Claims

1. Method for controlling a double clutch transmission (1) having a first clutch (2) and a second clutch (3), having a first input shaft (6) and having a second input shaft (7), wherein the first input shaft (6) can be connected by means of the first clutch (2), and the second input shaft (7) can be connected by means of the second clutch (3), to a drive, having a first group of gears and having a second group of gears, wherein the first input shaft (6) can be connected by means of the first group of gears, and the second input shaft (7) can be connected by means of the second group of gears, to an output for transmitting torque from the drive to the output, wherein the method for control permits the preselection of a target gear before a gear change from an engaged source gear from the first group of gears to the target gear from the second group of gears, wherein the preselection of the target gear is prevented or cancelled as a function of at least one parameter, preferably an operating parameter of the drive and/or of the double clutch transmission (1), **characterized**
- **in that** when a predetermined limiting value (M_{G}) for the at least one parameter is exceeded, the preselection of the target gear is prevented or cancelled,
- and **in that** the at least one parameter is a torque (M) of the drive or a variable which correlates with the torque (M) of the drive.

2. Method according to Claim 1, **characterized in that** a further parameter is a rotational speed (n) of the drive.

3. Method according to Claim 2, **characterized in that** the engagement of the target gear is prevented or cancelled as a function of a characteristic diagram of a plurality of parameters (n, M).

4. Method according to Claim 1, **characterized in that** the magnitude of the predetermined limiting value for the at least one parameter can be varied as a function of at least two different modes.

5. Method according to one of Claims 1 to 4, **characterized in that** the first clutch (2) and the second clutch (3) are embodied as hydraulically actuable clutches, and a clutch is respectively closed when pressure is applied and opened in a pressureless position.

## Revendications

1. Procédé de commande d'une transmission à double embrayage (1) avec un premier embrayage (2) et un deuxième embrayage (3), avec un premier arbre d'entrée (6) et avec un deuxième arbre d'entrée (7), le premier arbre d'entrée (6) pouvant être relié à l'entraînement en entrée par le biais du premier embrayage (2) et le deuxième arbre d'entrée (7) pouvant être relié à celui-ci par le biais du deuxième embrayage (3), avec un premier groupe de rapports et avec un deuxième groupe de rapports, le premier arbre d'entrée (6) pouvant être relié à un entraînement en sortie par le biais du premier groupe de rapports et le deuxième arbre d'entrée (7) pouvant être relié à un entraînement en sortie par le biais du deuxième groupe de rapports en vue de la transmission de moment de rotation de l'entraînement en entrée à l'entraînement en sortie, le procédé de commande permettant la présélection du rapport cible avant un changement de rapport d'un rapport source passé à partir du premier groupe de rapports à un rapport cible à partir du deuxième groupe de rapports, sachant qu'en fonction d'au moins un paramètre, de préférence un paramètre de fonctionnement de l'entraînement en entrée et/ou de la transmission à double embrayage (1), la présélection du rapport cible est empêchée ou annulée, **caractérisé en ce que** :
- en cas de dépassement d'une valeur limite prédéfinie (M_{G}) pour l'au moins un paramètre, la présélection du rapport cible est empêchée ou annulée ;
- et l'au moins un paramètre est un couple de rotation (M) de l'entraînement en entrée ou une grandeur corrélée au couple de rotation (M) de l'entraînement en entrée.

2. Procédé selon la revendication 1, **caractérisé en ce qu'**un paramètre supplémentaire est une vitesse de rotation (n) de l'entraînement en entrée.

3. Procédé selon la revendication 2, **caractérisé en ce qu'**en fonction d'une caractéristique, plusieurs paramètres (n, M) empêchent ou annulent le passage du rapport cible.

4. Procédé selon la revendication 1, **caractérisé en ce qu'**en fonction d'au moins deux modes différents, la hauteur de la valeur limite prédéfinie peut varier pour l'au moins un paramètre.

5. Procédé selon l'une quelconque des revendications 1 à 4, **caractérisé en ce que** le premier embrayage (2) et le deuxième embrayage (3) prennent la forme d'embrayages actionnables de façon hydraulique et qu'un embrayage est respectivement ouvert en cas d'injection de pression et fermé en cas de position sans pression.
